# EUROPEAN PATENT SPECIFICATION

(11) **EP 4 127 304 B1**
(45) Date of publication and mention of the grant of the patent: **05.08.2026**
(21) Application number: 21712549.1
(22) Date of filing: 22.03.2021
(51) Int. Cl.: D06M 11/79, D06M 16/00, D06M 23/08, D06M 15/53, D06M 15/267, D06M 13/463, D06M 11/83, D06M 13/507, A01N 33/12, A01N 59/16, A61K 9/127, A61K 31/724, A61K 47/40, D06M 11/13, A01N 43/90, A61K 9/107, A61K 47/02, A61K 47/10

(54) **ANTIVIRAL AND ANTIMICROBIAL FABRIC TREATMENT AS WELL AS FABRICS TREATED THEREWITH**
ANTIVIRALE UND ANTIMIKROBIELLE GEWEBEBEHANDLUNG SOWIE DAMIT BEHANDELTE GEWEBE
TRAITEMENT ANTIVIRAL ET ANTIMICROBIEN DE TISSUS AINSI QUE TISSUS AINSI TRAITÉS

(30) Priority: 26.03.2020 EP 20165963; 09.04.2020 DE 102020110027; 25.05.2020 EP 20176229
(43) Date of publication of application: 08.02.2023
(73) Proprietor: HeiQ Materials AG, 8952 Schlieren (CH)
(72) Inventor: HEIGHT, Murray J., Newtown, VIC 3220 (AU); SALATHE, Ralph, 79585 Steinen-Endenburg (DE); RASO, Renzo, 4143 Dornach (CH); NASSL, Walter, 86444 Affing (DE)
(74) Representative: Bremi, Tobias Hans
(86) International application number: PCT/EP2021/057254
(87) International publication number: WO 2021/191140

(56) References cited:
- EP-A1- 2 369 923
- US-A1- 2012 294 919
- US-B2- 8 889 398
- DATABASE WPI Week 201832, Derwent World Patents Index; AN 2018-244503, XP002800277
- DATABASE WPI Week 201817, Derwent World Patents Index; AN 2018-08070F, XP002800278

## Description

### TECHNICAL FIELD

The present invention relates to methods for the preparation of aqueous antibacterial and antiviral formulations for textile treatment, to formulations obtained by such a method, to uses of such formulations in particular for textile treatment, to textiles obtained using such formulations as well as methods for treating textiles with such formulations.

### PRIOR ART

Viruses and bacteria are, in spite of medicine and hygienic conditions having improved, still a considerable threat to mankind. In particular lethal viruses regularly emerge for whichever reason, leading to epidemic or even pandemic situations.

There is therefore an urgent need for protective measures to avoid infection. In particular in the field of medical care, but also in the field of personal protection, textiles are used, in many forms, including for example masks, face coverings, protective suits, et cetera. These textiles, to be worn and handled, are preferably at least partially air permeable, and therefore cannot fully prevent penetration of viruses or bacteria carried around by aerosols or transferred through contact with contaminated surfaces and the like. Furthermore, even if these textiles are impermeable, they need to be handled after use, which may involve touching them with unprotected hands et cetera. Considering that viruses can survive several days, this can lead to further problems even if wearing protective clothing. US9487912 discloses a disinfectant composition for textile and related substrates, and a method of treating a substrate to provide disinfecting antibacterial, antiviral and antifungal, wash durable, optionally enhanced with multifunctional properties. The active substances (e.g. quaternary ammonium silane, silver salts, PHMB) are formulated in combination with antifungal agents thiabendazoles or propiconazoles.

WO2007135163 proposes the use of poly(hexamethylene biguanide)hydrochloride as an antiviral agent for treating textiles.

CN1285432 discloses an anti-virus, anti-bacteria finishing agent. Fabric treatment is based on alkyl-dimethyl-benzyl-ammonium chloride, octamethyl cyclotetrasiloxane polymer and sodium hydroxide.

US 9,144,237 discloses sterilizing and deodorizing agents targeting bacteria, odors, toxic substances, etc., which are made from silver as metal particles and titanium dioxide as ceramic particles by (1) thermal bonding or (2) pressure bonding or (3) thermal/pressure bonding and mixing the resultant with hydroxyapatite as an adsorptive material. The agent can be mixed with ink, bonding agents and paints and applied to a variety of substrates. CN-A-107823222 provides a nanoscale compound antibacterial agent and a preparation method and application thereof, which relate to the technical field of antibacterial agents. The nanoscale compound antibacterial agent is mainly prepared from nanosilver, graphene, protein, phospholipid, polysaccharide, cholesterol, vitamin and other raw materials, functional substances, such as the vitamin, are wrapped by a lipidosome formed by the protein, the phospholipid, the cholesterol and other materials, moreover, the nanosilver, the graphene and other materials are loaded inside or on the surface of the lipidosome after being compounded, and thereby the nanoscale compound antibacterial agent which is highly similar to a cellular structure is produced. The invention further provides the preparation method of the nanoscale compound antibacterial agent, and the method can realize the uniform mixing of all the materials, thus being favorable for the increase of the stability of the nanoscale compound antibacterial agent.

EP-A-2369923 relates generally to the field of antibacterials and to the treatment, inhibition and prevention of disorders caused by bacteria. More particularly, this invention concerns a method for inhibiting gram-positive bacteria with a composition comprising at least one non-phospholipid lipid vesicle.

CN-A-107604662 provides a bactericidal and antiviral composition for modifying textiles. By weight, the bactericidal and antiviral composition for modifying textiles includes 20-50 parts of a chitosan quaternary ammonium salt, 2-10 parts of a penetrant, 1-5 parts of a cationic surfactant, 3-15 parts of nano-silver loaded modified chitosan, and 30-50 parts of purified water. Specifically, the chitosan quaternary ammonium salt is chitosan grafted biquaternary ammonium salt A and biquaternary ammonium salt B, the preparation raw materials of the biquaternary ammonium salt A include: 1-beta-D-ribofuranose-1, 2, 4-triazole-3-hydroxyamide, epichlorohydrin and long chain alkyl tertiary amine, and the preparation raw materials of the biquaternary ammonium salt B include: 1-hydroxyethyl-2-methyl-5-nitroimidazole, epichlorohydrin and long chain alkyl tertiary amine. And the modified chitosan is a chitosan organosilicon compound.

US-A-2012294919 relates to an antimicrobial metal composite formed by vaporizing an antimicrobial metal or antimicrobial metal salt such as silver, copper or salts thereof using an plasma system and cooling the formed vapor in the presence of a fluidized gas of filler powder. Alternatively, the filler or a filler precursor is entrained with the antimicrobial metal or antimicrobial metal precursor and vaporized and then upon cooling the antimicrobial metal vapor and filler vapor condense to form the composite. The composite shows high antimicrobial activity and can be incorporated into or onto polymers, coatings, textiles, paper, gels (for example for wound care), lubricants, adhesives and cosmetics or pharmaceutical, especially medical devices.

### SUMMARY OF THE INVENTION

It is therefore the aim of the present invention to provide for highly efficient antiviral and antibacterial protection of in particular textiles. Bacteria and viruses contacting the textile impregnated with such a formulation shall be killed and/or inactivated as effectively as possible. The invention is however not limited to treating textiles, but is aiming at protecting any kind of object at the surface of which or within which an antibacterial and antiviral effect is desired. The field of application therefore extends to textiles, be it woven, nonwoven or knitted, but also to objects to be protected from viruses and bacteria, for example because these objects in their intended use are contacted by people using them, such as housings for medical devices, medical devices as such, protective glasses, foils and objects based on such foils, such as protective tools in particular for healthcare applications, such as viewing shields, protection hoods, protective suits, but also carpets, shieldings, division walls, carpets, covers, for example for lamps, beds, healthcare devices, packaging material for sensitive objects, et cetera.

The problem with known antiviral or antibacterial (textile) formulations is that they are not suitable for broadband protection, and impart protection for certain types of bacteria or certain types of viruses only. On the other hand, the chemical systems being the basis for the corresponding formulations are very different, and are incompatible to be combined in one single textile treatment formulation. It is therefore a further aim of the present invention to provide for a method for the preparation of a broadband antiviral and antibacterial textile treatment formulation.

More specifically, the invention proposes a method for the preparation of an aqueous antibacterial and antiviral formulation in particular for textile treatment, which in combination contains silver particles as well as non-phospholipid vesicles.

The proposed (textile) treatment combines two separately-produced functional formulation components:
Formulation A: Silver-based particles in aqueous suspension

Formulation B: An aqueous vesicle emulsion, preferably with cyclodextrin-based components.

Formulation A and formulation B may be blended in various proportions, and with other formulation components to form a stable Product formulation.

As concerns Formulation A, it is specifically pointed out that while being described in the following often times in combination with formulation B, the corresponding formulations A are also independently and without being mixed with formulation B considered as separate inventions. Also a separate invention is any kind of description being given in the following of methods preparing such formulations of the type A.

The combined product formulation, but also the formulation A alone, may be applied to fabric substrates (e.g. woven, knitted, and non-woven), or to any object to be protected as defined above, in order to achieve antimicrobial and antiviral functionality.

The mixture of formulation A and formulation B results in a combined aqueous formulation that involves a dispersion with silver-based particles and emulsion of non-phospholipid vesicles whereby these components are discrete dispersed components. This is in contrast to the teachings of CN-A-107823222 whereby a desired formulation is to have the antibacterial silver component intermingled with the lipidosome components in such a way that the antibacterial component is loaded inside or directly on the surface of the lipidosome structures with the teachings directing towards similarity to a cellular structure containing both components in single blended particle. This emphasis on a combined structure is further reflected in the emphasis of using a ultra-high pressure micro-jet circulation process that seeks to intimately combine the antibacterial components and the lipidosome components into highly amalgamated structures. In contrast the present invention involves blending of two separately prepared aqueous formulations that emphasizes the respective silver-based particles and non-phospholipid vesicles remaining as separate discrete structures in a combined aqueous medium. CN-A-107823222 specifically instructs that the inclusion of cholesterol in the product formulation is advantageous whereas the present invention specifically rather seeks to avoid the inclusion of cholesterol in the formulation as the non-phospholipid vesicles are designed to interact with and deplete the cholesterol layer surrounding enveloped viruses leading to antiviral effect. It is preferred not to have any cholesterol as lipid vesicle forming systems, because inclusion of cholesterol in the formulation may degrade the intended efficacy of the non-phospholipid vesicles. Application onto the various fabric substrates may variously be achieved through industrial processes (e.g. padding, dipping, coating, spraying, printing etc.).

Typical applications for fabrics or foils and objects based on foils treated with the formulation include textile or protective articles for use in sensitive environments including masks, filters, gowns, drapes, coverings, carpets etc.

More generally speaking, the proposed invention provides a method for the preparation of an aqueous antibacterial and antiviral formulation in particular for textile treatment comprising silver micro or nanoparticles, preferably silver-silica micro composite particles or silver chloride particles as well as non-phospholipid lipid vesicles (nPLV) or without such non-phospholipid lipid vesicles. The proposed method in case of the combination of both formulations is characterised in that separately
- a first aqueous formulation comprising silver nano or micro particles, preferably silver-silica micro composite particles and/or silver chloride particles, and no non-phospholipid lipid vesicles (formulation A) and
- a second aqueous formulation comprising non-phospholipid lipid vesicles and no silver particles (formulation B)
are prepared.

Subsequently the first and second aqueous solutions are blended, optionally with addition of water and additional additives, at a temperature of at most 40°C, for the combination formulation.

Said first aqueous formulation (formulation A) is prepared in that silver micro or nanoparticles, preferably silver-silica micro composite or silver chloride particles, are added to water, together with at least one cationic surfactant or non-ionic surfactant, optionally with addition of further silver formulation additives, until a stable homogenous dispersion is formed containing silver micro or nanoparticles, preferably silver chloride particles or silver-silica micro composite particles, in association with said cationic surfactant or non-ionic polymeric surfactant. Preferably, in case of silver-silica micro composite particles a cationic surfactant is used, and in case of silver chloride particles a non-ionic polymeric surfactant is used. Preferably, the surfactants are polymeric surfactants. When talking about silver chloride particles in this application this includes silver chloride particles as such but also composite particles, in which silver chloride is embedded or in the form of aggregates with other particles, e.g. in the form of titanium dioxide particles which are aggregated with silver chloride particles.

Said second aqueous formulation, if used, is prepared in that at least one vesicle-forming non-phospholipid and optionally further vesicle formulation additives are added to water, are mixed at elevated temperature of more than 50°C, until homogeneous mixture is obtained, and subsequently cooled to a temperature of at most 40°C under formation of homogeneous emulsion.

The preferred silver component used in the formulation is based on a silver-silica composite powder. The particles particularly useful for use in the proposed invention can be obtained using the method as disclosed in US2009131517, the disclosure of which in terms of the making process is expressly referred to in this disclosure. Typically, the weight proportion of silver in relation with the amorphous silica in these particles is in the range of 1:8-1:2, preferably in the range of 1:4, and/or the silver-silica micro composite particles preferably have an average size in the range of 0.1-10 µm, preferably in the range of 0.5 - 5.0 µm, and the silver is preferably embedded in these particles in the form of particles with an average diameter in the range of 1- 10 nm. Averages are given as number averages.

Alternatively, the silver component used in the formulation is based on silver chloride, preferably in the form of a combined silver chloride titanium dioxide composite product. The proportion (by weight) of silver chloride to titanium dioxide is preferably in the range of 10:90-30:70, and the particle size of the corresponding composite powder is above 100 nm, preferably in the range of 200-1000 nm (d50).

The silver material is formulated together with additional components to facilitate formulation properties such as stability, compatibility, ease of processing, durability etc., wherein of particular importance there is a cationic or non-ionic surfactant. So also non-ionic surfactants can be added, particularly preferably if silver chloride titanium dioxide composite particles are used.

In addition or as an alternative to the silver metal - silicon dioxide composite material, therefore other silver-based solids may be employed such as particulate nanosilver, silver chloride particles either suspended directly or supported as part of a titanium dioxide composite (e.g. Clariant JMAC).

The vesicle formulation component is based on a non-phospholipid vesicle structure that interacts with enveloped virus types to render removal of the lipid envelop and subsequent denaturing of the virus RNA or DNA internal genetic materials. This technology as such is known in the art and has shown to be efficient for example from US 5,561,062 or US 8,889,398.

The problem associated with the co-formulation of a silver particle based antibacterial/antiviral formulation with a vesicle based formulation is that adding active silver particles simply to a vesicle based formulation will negatively influence the vesicles and/or silver materials and will mutually degrade them at the moment of mixing and in particular upon storage. Preparing a stable combined formulation with silver particles and antiviral vesicles is therefore not simply possible.

What has been found now is that surprisingly it is possible to co-formulate silver particles and vesicle based antiviral formulations by separately preparing a silver micro or nano particle based dispersion and vesicle based antiviral emulsion/formulation, and to then combine them essentially at room temperature only. The silver particle dispersion to this end is prepared in that the silver particles are co-formulated with a cationic or non-ionic surfactant, which forms a micro composite with a polymeric resin matrix or non-ionic matrix in close local proximity surrounding the micro composite structure effectively enveloping the silver particles. By first preparing these micro composites the negative interaction between the vesicle components and the silver particles and also between the cationic or non-ionic surfactants on the vesicles is surprisingly reduced and stable formulations can be obtained that can be used for textile treatment and that, e.g. on the textile, have a high antiviral and antibacterial effect.

So the principle of the preparation is to surround the silver-silica microcomposite or silver chloride particle with polymeric resin matrix or a non-ionic matrix that contains a cationic /non-ionic surfactant component. The close association of the cationic/non-ionic surfactant component and the (polymeric) matrix is advantageous from a perspective of formulation stability and also efficacy of the formulated product. In case of surrounding silver chloride particles, in particular silver chloride titanium dioxide composite particles, preferably a non-ionic surfactant is first surrounding the micro composite and is then stabilised for example with ethylene glycol.

The initial step of the procedure involves blending the silver-silica microcomposite or silver chloride into a solution of the matrix components e.g. followed by high intensity mixing through bead milling (typically for a time span in the range of 4 - 12 hours).

The matrix preparation procedure generates a homogeneous mixture where the matrix components penetrate into and surround the silver-silica microcomposite particles.

The balance of ingredients (surfactants and viscosity modifier components) can be formulated together prior to introduction of the matrix preparation via in-line high shear mixer.

The resulting formulation is a homogeneous dispersion with excellent storage and operational stability.

For the cationic or non-ionic surfactant component in the matrix a wide range of alternatives is given, including cosmetic cationic or non-ionic surfactants and amino-based surfactants and polymers.

The silver-based component in the example is a silver-silica composite, however alternative silver forms may be used separately or in combination (e.g. nanoparticulate silver, silver colloids, silver chloride particles, silver chloride supported on titanium dioxide, etc.). It is also possible to introduce further antimicrobial metal or metal oxide forms such as based on copper as an alternative or in combination with the silver material(s).

The use of silver silica particles is one preferred embodiment, however according to another preferred embodiment the silver in the formulation is in the form of a micro composite or nano composite particle comprising silver chloride and titanium dioxide. Preferably, such a system is generated by precipitating silver chloride on the surface of titanium dioxide particles, and the titanium dioxide particles preferably have a particle size (d50) in the range of 0.2 to 0.8 µm. In case one uses such silver chloride and titanium dioxide composite particles, using the above-mentioned cationic surfactant can still be beneficial but is not necessarily required any more.

Matrix and auxiliary reagents may be substituted for various functionally similar components.

The final functionality of the product formulation requires stability of both vesicle structures and silver particles within the final product formulation.

While the vesicle structures are stable in the separately prepared vesicle formulation and the silver formulation, respectively, it is not obvious that a blended formulation of the two component formulations would achieve stability.

A stable combined formulation needs to preserve the vesicle structures and to maintain a homogeneous distribution of the silver particles throughout the mixture.

For a blended formulation involving vesicle structures, it is known art that there are many surfactants and auxiliary reagents that may disrupt the stability and structural integrity of the vesicles. Furthermore, agglomeration and flocculation of particulate dispersions such as the silver formulation can be induced through introduction of surfactants and other reagents. A significant feature of the present invention is that it has been possible to achieve a stable formulation of the vesicle and silver particle components together in the same formulation. The formulation stability may be achieved across a range of blend ratios that cannot be predicted a priori.

A principle for achieving the blended formulation stability is the unique role of the silver formulation where the silver ingredients are embedded within a resinous matrix with close association with a cationic surfactant. This approach results in keeping cationic or non-ionic surfactants in close proximity with the silver ingredient rather than distributing homogenously in the final blended product formulation where it may be available for interacting with and potentially disrupting the vesicle structures.

A further principle for achieving stability of the combined formulation is maintaining similar pH character for each component formulation prior to blending.

The combined interaction of the silver (together with selected co-ingredients) and the non-phospholipid vesicle enables an enhanced level of antiviral activity against both enveloped viruses and also non-enveloped viruses.

Silver (via silver ions and/or silver metal) provides antiviral action against both enveloped and non-enveloped viruses. It would be expected that the lipid layer of enveloped viruses provides greater resistance to diffusion of silver ions and subsequent interaction with the RNA or DNA material compared to non-enveloped viruses. In contrast, the lipid-mediating mechanism of the vesicle technology is specific to enveloped viruses.

The combined action of silver and vesicle structure therefore acts to enable greater activity of silver against enveloped viruses while also providing action against non-enveloped viruses.

The selected formulation co-ingredients in principle lead to greater level of proximity of the silver materials with the virus materials, leading to enhanced antiviral action of the silver ions and/or silver-based particles. Some of the components may also have a basis for direct degrading action against viruses.

The silver materials are formulated with a range of co-ingredients including cationic surfactants (e.g. Cocobis(2-hydroxyethyl) methylammonium chloride) or non-ionic surfactants.

Cationic but also non-ionic surfactants in particular have shown potential for interaction with enveloped viruses, including in the presence of proteins. The apparent binding tendency of cationic surfactants with enveloped virions means that for silver components that are closely surrounded by the cationic surfactants, the virions may be actively brought into closer proximity to the silver source, leading in principle to greater antiviral efficacy of the silver. According to a first preferred embodiment, said cationic surfactant is a quaternary surfactant, preferably a polymeric quaternary ammonium surfactant, in particular based on fatty acid based building blocks, polyacrylate building blocks, polymethacrylate building blocks, C10-C20 alkyl building blocks, benzyl building blocks, or a combination or mixture thereof.

Said cationic surfactant is preferably selected from the group consisting of: quaternary ammonium polyacrylate, quaternary ammonium ethoxylate, quaternary ammonium propoxylate, quaternary ammonium fatty acid derivative, and is most preferably selected from the group consisting of: poly(2-(trimethylamino)ethyl methacrylate), coconut bis-(2-hydroxyethyl) methyl ammonium, oleyl bis-(2-hydroxyethyl)methyl ammonium, erucyl bis(2-hydroxyethyl)(methyl)ammonium, benzyl(2-hydroxyethyl)dimethylammonium chloride, dodecylbis(2-hydroxyethyl)methylammonium, or a combination or mixture thereof. The negatively charged counterions for the ammonium cation in these systems can e.g. be chloride or bromide or combinations thereof, but also other inorganic systems such as sulfates, phosphates are possible or organic counterions such as acetates, or polymeric organic anions.

Preferably in case of silver chloride particles, said non-ionic surfactant can be a polyethoxylated and/or polypropoxylated surfactant, in particular based on fatty acid based building blocks, C10-C40 alkyl, aryl or arylalkyl building blocks, or a combination or mixture thereof.

Preferably the non-ionic surfactant is selected from the group consisting of: alcohol C10-C28, preferably alcohol C10 - C20, most preferably alcohol C12 - C18 or alcohol C16-18, tristyrylphenol tridecyl ether, ethoxylated in each case with 3-70 EO units, preferably with 20-60 EO units, most preferably with 30-50 EO units, wherein most preferably a system of the type alcohol C16-C18+50EO is used.

The first aqueous formulation can be prepared in that the silver-silica micro composite particles are added to water together with said cationic surfactant, wherein the proportion of silver-silica micro composite particles is in the range of 0.1-1 %(w/w), preferably in the range of 0.2-0.5 %(w/w) and wherein the proportion of the cationic surfactant is in the range of 0.5-7.5% (w/w), preferably in the range of 1.5-5% (w/w) . Preferably the proportion of the cationic surfactant if chosen as an ammonium compound is given for the chloride or bromide form. The concentrations in this case are given for the final formulation A.

The first aqueous formulation can alternatively be prepared in that the in that the silver-chloride particles are added to water together with said non-ionic surfactant, wherein the proportion of silver-chloride particles is in the range of 5-15 %(w/w), preferably in the range of 7-12 %(w/w) and wherein the proportion of the non-ionic surfactant is in the range of 0.5-12% (w/w), preferably in the range of 1-10% (w/w), and wherein the resulting mixture is mixed, preferably through milling, preferably through bead milling, for a time span of at least an hour, more preferably for a time span of more than 5 hours, at a temperature of at least 20°C, preferably at a temperature at or above room temperature. The concentrations in this case are given for the final formulation A.

According to another preferred embodiment, the silver formulation can be prepared in a two-step process, in a first step phase A is produced by suspending silver-containing particles within the cationic or non-ionic surfactant under intensive mixing, separately prepare an aqueous formulation with stabilising components such as rheology thickeners et cetera (phase B) and then introduce phase A into phase B in a manner to achieve homogeneous distribution within phase B, wherein phase B is the larger proportion of the final blend weight and forms more than 50% of the final formulation weight of formulation A. Preferably, the resulting mixture is mixed, preferably through milling, preferably through bead milling, for a time span of at least an hour, more preferably for a time span of more than 5 hours, at a temperature of at least 20°C, preferably at a temperature at or above room temperature.

Preferably as further silver formulation additives prior to mixing, or in the above process involving phase B, additives can be added selected from the group consisting of: alcohols, glycols, polyols, diols, phosphates, acids such as acetic acid, fragrance, colorants, non-ionic surfactants, odorants, anti-foaming agents, foaming agents, rheology modifiers such as thickeners or a combination thereof. These additives or just some of them may also be added only after the mixing of the silver (silica) particles and the cationic or non-ionic surfactant, in particular additives such as thickeners are of this kind.

It is again to be stressed that all this description above about the composition and the method of preparing formulation A is also regarded as an independent invention independent of formulation B and the combined product involving formulation A as well as B.

The vesicle-forming non-phospholipid can be selected from the group consisting of, the values in brackets indicating the hydrocarbon chain: fatty alcohol (C12-C20), fatty acid (C12-C20), ethoxylated (C12-C20) fatty alcohol, glycol ester of (C12-C20) fatty acid, ethoxylated of (C12-C20) fatty acid, glycerol fatty acid (C12-C20) monoester, glycerol fatty acid diester (C12-C18), ethoxylated glycerol fatty acid ester (C16-C18), fatty acid diethanolamide (C12-C20), fatty acid dimethyl amide (C12-C20), fatty acid sarcosinates (C12-C20), or a combination thereof.

Preferably, the vesicle-forming non-phospholipid is selected from a polyoxyethylene cetyl ether, palmitic acid, hexadecyl trimethylammonium bromide or chloride, oleic acid or a combination thereof.

Said vesicle formulation additives may comprise enhancers for the antiviral effect, e.g. selected from the group consisting of: poly- or oligosaccharides such as xylitol, in particular cyclodextrin or derivatives thereof, or a steroidogenic acute regulatory protein.

The second aqueous formulation can be prepared in that said vesicle-forming non-phospholipid and optionally further vesicle formulation additives are added to water, are mixed at elevated temperature of more than 55°C, until homogeneous mixture is obtained, and subsequently cooled to a temperature of at most 30°C under formation of homogeneous emulsion. Typically the proportion of the at least one vesicle-forming non-phospholipid is in the range of 1-8 %(w/w), preferably in the range of 2-5 %(w/w) and wherein the proportion of the enhancer if present is in the range of 1-8 % (w/w), preferably in the range of 2-6 % (w/w).

The second aqueous formulation preferably comprises, as non-phospholipid, a mixture of polyoxyethylene (2) cetyl ether with hexadecyltrimethylammonium (which can be in the chloride or bromide form, preferably in the bromide form), preferably in a weight proportion of 20: 1-5:1, most preferably 12:1-8:1, in a total concentration (taking the sum of polyoxyethylene (2) cetyl ether with hexadecyltrimethylammonium (bromium)) in the range of 3-5% (w/w).

Further preferably, the second aqueous formulation comprises, as enhancer, cyclodextrin, preferably (2-hydroxypropyl)-beta-cyclodextrin, in a proportion of 1-7% (w/w), preferably in the range of 3-6% (w/w).

The first and second aqueous solutions can be blended at a temperature of at most 40°C, preferably around room temperature, and wherein preferably 5-20% (w/w) of said first aqueous formulation are combined with 70-90% (w/w) of said second aqueous formulation, supplemented with water to a total of 100% (w/w).

The present invention further relates to an aqueous antibacterial and antiviral formulation in particular for textile treatment comprising silver-silica micro composite particles or silver chloride particles alone or in combination with, i.e. as well as non-phospholipid lipid vesicles (nPLV), preferably obtained using a method as described above.

Such a formulation comprises the silver-silica micro composite particles or silver chloride particles in association with said cationic or non-ionic polymeric surfactant, wherein preferably the silver-silica micro composite particles are present in a proportion in the range of 0.01-0.1% (w/w), preferably in a proportion in the range of 0.02-0.05% (w/w), wherein the at least one cationic polymeric surfactant is present in a proportion in the range of 0.1-0.5% (w/w), preferably in the range of 0.2-0.4% (w/w), and wherein said at least one vesicle-forming non-phospholipid is present in a proportion in the range of 2-5% (w/w), preferably in the range of 2.5-4% (w/w).

In case of silver-chloride particles these are preferably present in a proportion 5-15 %(w/w), preferably in the range of 7-12 %(w/w), and wherein the at least one non-ionic polymeric surfactant is present in a proportion in the range of 0.5-12% (w/w), preferably in the range of 1-10% (w/w).

Also the present invention relates to the use of a formulation, formulation A alone or the combined product comprising formulation A as well as formulation B, as detailed above or as obtained using a method as detailed above for the treatment of objects, in particular leather, fibrous materials such as paper and cardboard articles, polymeric surfaces including polyurethane, tarps, tents, bags, luggage, or of textiles, in particular for the treatment of woven, knitted or nonwoven textiles, preferably in the field of textiles for antiviral and/or antibacterial applications including masks, filters, gowns, drapes, coverings, carpets et cetera in particular for healthcare/hospital uses.

In addition to that, the present invention relates to an object in particular an object to wear, touch or to carry by a human to be protected, in particular leather, fibrous materials such as paper and cardboard articles, polymeric surfaces including polyurethane, tarps, tents, bags, luggage, a woven or knitted or nonwoven textile treated with a formulation (formulation A alone or combined product) obtained using a method as detailed above or treated with the formulation as detailed above, preferably in the field of textiles for antiviral and/or antibacterial applications including masks, filters, gowns, drapes, coverings, carpets et cetera in particular for hospital uses.

Last but not least the present invention relates to a method for rendering an object to be protected, in particular an object based on leather, fibrous materials such as paper and cardboard articles, polymeric surfaces including polyurethane, tarps, tents, bags, luggage, woven or nonwoven textile antibacterial and/or antiviral by treating it with a formulation (again formulation A alone or the combined product in each case) obtained using a method as detailed above, or with a formulation as described above, wherein the formulation is preferably applied by padding, dipping, coating, spraying, printing or a combination thereof, and wherein the formulation is further preferably added to the textile in the range of 2-30% (weight of fabric basis), preferably in the range of 5-20%.

Further embodiments of the invention are laid down in the dependent claims.

### DESCRIPTION OF PREFERRED EMBODIMENTS

Preferred embodiments of the invention are described in the following with reference to the examples, which are for the purpose of illustrating the present preferred embodiments of the invention and not for the purpose of limiting the same.

### Vesicle formulation:

An illustrative vesicle formulation composition is as follows:

| No | CAS | Chemical basis | % (w/w) |
|---|---|---|---|
| B1 | 9004-95-9 | Polyoxyethylene (2)cetyl ether | **3.6%** |
| B2 | 57-09-0 | Hexadecyltrimethylammonium bromide | **0.4%** |
| B3 | 128446-35-5 | (2-hydroxypropyl)-beta-cyclodextrin | **4.5%** |
| B4 | 7732-18-5 | Water | **91.5%** |
| | | **TOTAL** | **100.00%** |

| | | | |
|---|---|---|---|
| Polysiloxane defoamer may optionally be added | | | |

### Preparation procedure

Blending of components at elevated temperature (e.g. >60°C) until homogeneously mixed. Cool to ambient temperature while mixing and/or high shear in-line mixer.

The resulting formulation is a homogeneous emulsion with excellent storage and operational stability.

### Variations and extensions

Non-phospholipid components (B1) may be substituted as detailed above. Hexadecyltrimethylammonium bromide (B2) may be substituted by Hexadecyltrimethylammonium chloride (CAS 112-02-7).

(2-hydroxypropyl)-beta-cyclodextrin (B3) may be substituted or used in combination with other cyclodextrin-based compounds as detailed above. Furthermore, other sugars, oligosaccharides and polysaccharides may be used as substitutes for or in combination with the cyclodextrin-based compounds.

### Silver particle formulation (1):

An illustrative silver formulation composition is as follows:

| No | CAS | Chemical basis | % (w/w) |
|---|---|---|---|
| A1 | 53637-25-5 | Polyester polyol | 2.5% |
| A2 | 67-63-0 | Isopropyl alcohol | 1.1% |
| A3 | 25265-71-8 | Dipropylene glycol | 4.3% |
| A4 | 68439-50-9 | Alcohols C12-14, ethoxylated | 0.2% |
| A5 | 70750-47-9 | Cocobis(2-hydroxyethyl) methylammonium chloride | 0.1% |
| A6 | 126-71-6 | Triisobutylphosphate | 0.1% |
| A7 | 7440-22-4 | Silver (as part of microcomposite) | 0.09% |
| A8 | 112945-52-5 | Amorphous silica (as part of microcomposite) | 0.31% |
| A9 | 9003-11-6 | polypropyleneoxide and polyethyleneoxide block copolymer | 0.2% |
| A10 | 9000-30-0 | Guar gum | 0.5% |
| A11 | 26161-33-1 | Cationic polyacrylate | 3.0% |
| A12 | 64-19-7 | Acetic acid | 0.1% |
| A13 | 7732-18-5 | Water | 87.5% |
| | | **TOTAL** | **100.00%** |

### Preparation procedure:

The principle of the preparation is to surround the silver-silica microcomposite with polymeric resin matrix that contains a cationic surfactant component. The close association of the cationic surfactant component and the polymeric matrix is advantageous from a perspective of formulation stability and also efficacy of the formulated product.

The initial step of the procedure involves blending the silver-silica microcomposite into a solution of the matrix components (A1 through A6 in the above table) followed by high intensity mixing through bead milling (ca. 8 hours).

The matrix preparation procedure generates a homogeneous mixture where the matrix components penetrate into and surround the silver-silica microcomposite particles.

The balance of ingredients (surfactants and viscosity modifier components) are formulated together prior to introduction of the matrix preparation via in-line high shear mixer.

The resulting formulation is a homogeneous dispersion with excellent storage and operational stability.

### Silver particle formulation (2):

Another illustrative silver formulation composition is as follows:

| No | CAS | Chemical basis | % (w/w) |
|---|---|---|---|
| A1 | 7783-90-6 | Silver chloride* | **2.0%** |
| A2 | 13463-67-7 | Titanium dioxide* | **8.0%** |
| A3 | 13463-67-7 | Titanium dioxide | **5.0%** |
| A4 | 107-21-1 | Ethylene glycol | **2.6%** |
| A5 | 68439-49-6 | Alcohol C16C18, ethoxylated | **1.5%** |
| A6 | 9004-62-0 | Hydroxyethylcellulose | **0.7%** |
| A7 | - | Polysiloxane defoamer | **0.17%** |
| A8 | 7732-18-5 | Water | **80.03%** |
| | | **TOTAL** | **100.00%** |

| | | | |
|---|---|---|---|
| * As part of silver chloride - titanium dioxide microcomposite particle. | | | |

### Preparation procedure in more detail:

The silver chloride - titanium dioxide microcomposite particles are, generally speaking, prepared as follows:
1. Titanium dioxide particles are suspended in aqueous solution of silver nitrate;
2. Addition of sodium chloride leading to precipitation of silver chloride on the surface of the titanium dioxide particles;
3. Addition of other formulation components such as surfactants and stabilizers.

More specifically, the silver chloride - titanium dioxide microcomposite particles used here were processed using the following recipe:
The principle of the preparation is to surround the silver chloride - titanium dioxide microcomposite with either a cationic surfactant or non-ionic surfactant component. Optionally a polymeric matrix component may be added to give additional material surrounding the microcomposite. The close association of the cationic surfactant or non-ionic surfactant components and the polymeric matrix is advantageous from a perspective of formulation stability and also efficacy of the formulated product.

The initial step of the procedure involves blending the silver chloride - titanium dioxide microcomposite and additional titanium dioxide particles into a solution of the matrix components (ethylene glycol, alcohol C16C18, ethoxylated, and polysiloxane) followed by high intensity mixing through bead milling (ca. 8 hours).

The matrix preparation procedure generates a homogeneous mixture where the matrix components penetrate into and surround the silver chloride - titanium dioxide microcomposite particles.

The balance of ingredients (surfactants and viscosity modifier components, i.e. ethylene glycol, ethyl cellulose (thickener) and additional polysiloxane defoamer are formulated together prior to introduction of the matrix preparation via in-line high shear mixer.

The resulting formulation is a homogeneous dispersion with excellent storage and operational stability.

More specifically the following process steps can be used to manufacture silver-containing formulations where the silver material is particulate in nature:

| Step | Process | | Rationale |
|---|---|---|---|
| Step 1 | • Suspend silver-containing particles within a surfactant and/or polymer formulation. | | • Provide intimate contact between the surface of the particles and the surfactant and/or polymer components. |
| | | ∘ Use general agitation/stirring vessels. | |
| | | | • The close contact of the surfactant and/or polymer components provides a shielding function to aid homogeneity, functionality and stability of the silver-containing particles and the final formulation components. |
| | • Process the suspension through intensive shear in a bead mill to give effective coverage of the particle surfaces with the surfactant and/or polymer components. | | |
| | | ∘ Indicative milling time typically 6 hours per 500kg batch size, e.g. in a bead mill | |
| | • Resulting particle concentrate formulation designated as 'Phase A' | | |
| Step 2 | • Prepare an aqueous formulation with stabilizing components such as rheology thickeners. | | • Phase B preparation acts as a dilution medium for the particle concentrate (Phase A). Phase B formulation components act to provide a stable dispersion of the Phase A particle components (e.g. stable against sedimentation etc.) when added to the Phase B preparation. |
| | | ∘ Use general agitation/stirring vessels. | |
| | | ∘ High shear mixers (inline or batch) may be needed for some raw materials. | |
| | • Resulting formulation designated as 'Phase B' | | |
| Step 3 | • Introduce the 'Phase A' formulation into the 'Phase B' formulation in a manner to achieve homogeneous distribution within the 'Phase B' liquid. | | • Progressive dosing of Phase A into the Phase B preparation aims to surround the individual particles prepared in Phase A with the stabilization components present in the Phase B preparation. This stabilizes the particles in the diluted mixture giving a stable and homogeneous combined formulation. |
| | • Dosing through an in-line high-shear system achieves a high level of mixing and homogeneity. | | |
| Step 4 | • Add any final components to the combined mixture. | | • Additional auxiliary components may be added to the combined formulation if needed (e.g. for pH adjustment or for additional stabilization or rheology control) |

The Phase B formulation is the larger proportion of the final blend weight.

The Phase A formulation is prepared as a particle concentrate and generally forms less than 50% of the final formulation weight.

The Phase A formulation component typically forms between 10% and 40% of the final formulation weight.

The silver materials may optionally be added to the Phase A preparation as a dry powder or as an aqueous pre-suspension. If a pre-suspension form is used, corresponding adjustments are made to the water balance and mixture proportions to accommodate this.

Example silver formulations indicating example compositions of Phase A and Phase B preparations together with the blending proportions for achieving the final product composition are as follows:

### Example 1: Silver-silica basis

| Blend ratio | | | 10.2% | 89.8% | 100.0% |
|---|---|---|---|---|---|
| **#** | **CAS** | **Chemical** | **Phase A** | **Phase B** | **Final** |
| 1 | 25265-71-8 | Dipropylene Glycol | 34.26% | 0.83% | **4.25%** |
| 2 | 70750-47-9 | Cocobis(2-hydroxyethyl) methylammonium chloride | 1.09% | | **0.11%** |
| 3 | 126-71-6 | Triisobutylphosphate | 0.15% | 0.02% | **0.03%** |
| 4 | 7440-22-4 | Silver (*) | 0.75% | | **0.08%** |
| 5 | 112945-52-5 | Silicon dioxide (*) | 2.99% | | **0.31%** |
| 6 | - | Polyester polyol | 24.45% | | **2.50%** |
| 7 | 26161-33-1 | Cationic polyacrylate | | 3.34% | **3.00%** |
| 8 | 68439-50-9 | Alcohol C12-C14, ethoxylated | 1.47% | | **0.15%** |
| 9 | 67-63-0 | Isopropyl alcohol | 10.48% | | **1.07%** |
| 10 | 9003-11-6 | Copolymer of ethylene and propylene oxide | | 0.22% | **0.20%** |
| 11 | 9000-30-0 | Guar | | 0.56% | **0.50%** |
| 12 | 7732-18-5 | Water | 24.37% | 95.03% | **87.81%** |
| | | | 100.00% | 100.00% | **100.00%** |

| | | | | | |
|---|---|---|---|---|---|
| * silver - silicon dioxide composite | | | | | |

### Example 2: Silver-silica basis

| | | Blend ratio | 10.3% | 89.7% | 100.0% |
|---|---|---|---|---|---|
| # | **CAS** | **Chemical** | **Phase A** | **Phase B** | **Final** |
| 1 | 25265-71-8 | Dipropylene Glycol | 34.00% | 0.83% | **4.25%** |
| 2 | 70750-47-9 | Cocobis(2-hydroxyethyl) methylammonium chloride | 1.08% | | **0.11%** |
| 3 | 126-71-6 | Triisobutylphosphate | 0.15% | 0.02% | **0.03%** |
| 4 | 7440-22-4 | Silver (*) | 0.74% | | **0.08%** |
| 5 | 112945-52-5 | Silicon dioxide (*) | 2.97% | | **0.31%** |
| 6 | - | Polyester polyol | 24.27% | | **2.50%** |
| 7 | 9004-62-0 | Hydroxyethylcellulose | | 0.78% | **0.70%** |
| 8 | 68439-50-9 | Alcohol C12-C14, ethoxylated | 1.46% | | **0.15%** |
| 9 | 67-63-0 | Isopropyl alcohol | 10.40% | | **1.07%** |
| 10 | 9003-11-6 | Copolymer of ethylene and propylene oxide | | 0.22% | **0.20%** |
| 11 | 7732-18-5 | Water | 24.95% | 98.15% | **90.61%** |
| | | | 100.00% | 100.00% | **100.00%** |

| | | | | | |
|---|---|---|---|---|---|
| * silver - silicon dioxide composite | | | | | |

### Example 3: Silver-silica basis

| Blend ratio | | | 12.1% | 87.9% | 100.0% |
|---|---|---|---|---|---|
| **#** | **CAS** | **Chemical** | **Phase A** | **Phase B** | **Final** |
| 1 | 25265-71-8 | Dipropylene Glycol | 29.05% | 0.85% | **4.25%** |
| 2 | 70750-47-9 | Cocobis(2-hydroxyethyl) methylammonium chloride | 8.30% | | **1.00%** |
| 3 | 126-71-6 | Triisobutylphosphate | 0.12% | 0.02% | **0.03%** |
| 4 | 7440-22-4 | Silver (*) | 0.63% | | **0.08%** |
| 5 | 112945-52-5 | Silicon dioxide (*) | 2.54% | | **0.31%** |
| 6 | - | Polyester polyol | 20.74% | | **2.50%** |
| 7 | 68439-50-9 | Alcohol C12-C14, ethoxylated | 1.24% | | **0.15%** |
| 8 | 67-63-0 | Isopropyl alcohol | 8.89% | | **1.07%** |
| 9 | 9003-11-6 | Copolymer of ethylene and propylene oxide | | 0.23% | **0.20%** |
| 10 | 9000-30-0 | Guar | | 0.57% | **0.50%** |
| 11 | 24938-91-8 | polyoxyethylene (15) tridecyl ether | 6.64% | | **0.80%** |
| 12 | 7732-18-5 | Water | 21.85% | 98.34% | **89.12%** |
| | | | 100.00% | 100.00% | **100.00%** |

| | | | | | |
|---|---|---|---|---|---|
| * silver - silicon dioxide composite | | | | | |

### Example 4: Silver chloride - titania basis

| Blend ratio | | | 38.2% | 61.8% | 100.0% |
|---|---|---|---|---|---|
| # | **CAS** | **Chemical** | **Phase A** | **Phase B** | **Final** |
| 1 | 7783-90-6 | Silver chloride (*) | 5.24% | | **2.00%** |
| 2 | 13463-67-7 | Titanium dioxide (*) | 20.96% | | **8.00%** |
| 3 | 13463-67-7 | Titanium dioxide | 13.10% | | **5.00%** |
| 4 | 107-21-1 | Ethylene Glycol | 1.57% | 3.23% | **2.60%** |
| 5 | 68439-49-6 | Alcohol C16-C18, ethoxylated | 3.93% | | **1.50%** |
| 6 | | Polysiloxane defoamer | 0.22% | 0.14% | **0.17%** |
| 7 | 9004-62-0 | Hydroxyethylcellulose | | 1.13% | **0.70%** |
| 8 | 7732-18-5 | Water | 54.98% | 95.50% | **80.03%** |
| | | | 100.00% | 100.00% | **100.00%** |

| | | | | | |
|---|---|---|---|---|---|
| * silver chloride - titanium dioxide composite | | | | | |

### Example 5: Silver chloride - titania basis

| Blend ratio | | | 40.2% | 59.8% | 100.0% |
|---|---|---|---|---|---|
| # | **CAS** | **Chemical** | **Phase A** | **Phase B** | **Final** |
| 1 | 7783-90-6 | Silver chloride (*) | 4.98% | | **2.00%** |
| 2 | 13463-67-7 | Titanium dioxide (*) | 19.90% | | **8.00%** |
| 3 | 99734-09-5 | Tristyrylphenol ethoxylated | 19.90% | | **8.00%** |
| 4 | - | Polyurethane | | 6.02% | **3.60%** |
| 5 | 67-63-0 | Isopropyl alcohol | 3.11% | 2.09% | **2.50%** |
| 6 | - | Polysiloxane defoamer | 0.21% | 0.14% | **0.17%** |
| 7 | 7732-18-5 | Water | 51.90% | 91.75% | **75.73%** |
| | | | 100.00% | 100.00% | **100.00%** |

| | | | | | |
|---|---|---|---|---|---|
| * silver chloride - titanium dioxide composite | | | | | |

### Example 6: Silver chloride - titania basis

| Blend ratio | | | 31.9% | 68.1% | 100.0% |
|---|---|---|---|---|---|
| # | **CAS** | **Chemical** | **Phase A** | **Phase B** | **Final** |
| 1 | 7783-90-6 | Silver chloride (*) | 5.35% | | **1.70%** |
| 2 | 13463-67-7 | Titanium dioxide (*) | 21.40% | | **6.82%** |
| 3 | 57-55-6 | Propylene glycol | 3.34% | 1.56% | **2.13%** |
| 4 | 9003-11-6 | Copolymer of ethylene and propylene oxide | | 2.09% | **1.42%** |
| 5 | 64-17-5 | Ethanol | 3.34% | 1.56% | **2.13%** |
| 6 | 9000-30-0 | Guar | | 7.29% | **4.97%** |
| 7 | 24938-91-8 | polyoxyethylene (15) tridecyl ether | 10.70% | | **3.41%** |
| 8 | - | Polysiloxane defoamer | 0.01% | 0.01% | **0.01%** |
| 9 | 7732-18-5 | Water | 55.85% | 87.49% | **77.41%** |
| | | | 100.00% | 100.00% | **100.00%** |

| | | | | | |
|---|---|---|---|---|---|
| * silver chloride - titanium dioxide composite | | | | | |

### Total product formulation (1):

A typical example formulation for the combined product formulation, using the above first silver-silica formulation is as follows:

| No | CAS | Chemical basis | % (w/w) |
|---|---|---|---|
| 1 | 9004-95-9 | Polyoxyethylene (2)cetyl ether | 2.9% |
| 2 | 57-09-0 | Hexadecyltrimethylammonium bromide | 0.3% |
| 3 | 128446-35-5 | (2-hydroxypropyl)-beta-cyclodextrin | 3.6% |
| 4 | 53637-25-5 | Polyester polyol | 0.25% |
| 5 | 67-63-0 | Isopropyl alcohol | 0.1% |
| 6 | 25265-71-8 | Dipropylene glycol | 0.4% |
| 7 | 68439-50-9 | Alcohols C12-14, ethoxylated | 0.02% |
| 8 | 70750-47-9 | Cocobis(2-hydroxyethyl) methylammonium chloride | 0.01% |
| 9 | 126-71-6 | Triisobutylphosphate | 0.01% |
| 10 | 7440-22-4 | Silver (as part of microcomposite) | 0.01% |
| 11 | 112945-52-5 | Amorphous silica (as part of microcomposite) | 0.03% |
| 12 | 9003-11-6 | polypropyleneoxide and polyethyleneoxide block copolymer | 0.02% |
| 13 | 9000-30-0 | Guar gum | 0.04% |
| 14 | 26161-33-1 | Cationic polyacrylate | 0.30% |
| 15 | 64-19-7 | Acetic acid | 0.01% |
| 16 | 7732-18-5 | Water | 92.0% |
| | | **TOTAL** | **100.00%** |

### Preparation procedure

The product formulation is produced by blending the silver formulation and the vesicle formulation together with addition of water (that may optionally contain additional auxiliary or functional components).

The blending procedure (with simple vessel agitation) proceeds in the following order. The blending ratio reflects the ratios needed to produce the exemplar product composition above.

| No | Formulation component | % (w/w) |
|---|---|---|
| 1 | Vesicle formulation | **80%** |
| 2 | Silver formulation | **10%** |
| 3 | Water | **10%** |
| | **TOTAL** | **100%** |

Steps 2 and 3 may optionally be reversed. The resulting formulation is a homogeneous emulsion with excellent storage and operational stability.

### Total product formulation (2):

Another example formulation for the combined product formulation, using the above first, silver chloride - titanium dioxide formulation is as follows:

| No | CAS | Chemical basis | **% (w/w)** |
|---|---|---|---|
| 1 | 9004-95-9 | Polyoxyethylene (2)cetyl ether | **2.88%** |
| 2 | 112-02-7 | Hexadecyltrimethylammonium chloride | **0.32%** |
| 3 | 128446-35-5 | (2-hydroxypropyl)-beta-cyclodextrin | **3.60%** |
| 4 | 7783-90-6 | Silver chloride* | **0.03%** |
| 5 | 13463-67-7 | Titanium dioxide* | **0.10%** |
| 6 | 13463-67-7 | Titanium dioxide | **0.06%** |
| 7 | 107-21-1 | Ethylene glycol | **0.03%** |
| 8 | 68439-49-6 | Alcohol C16C18, ethoxylated | **0.02%** |
| 9 | 9004-62-0 | Hydroxyethylcellulose | **0.01%** |
| 10 | - | Polysiloxane defoamer | **0.01%** |
| 11 | 7732-18-5 | Water | **92.94%** |
| | | **TOTAL** | **100.00%** |

| | | | |
|---|---|---|---|
| * As part of silver chloride - titanium dioxide microcomposite particle. | | | |

### Preparation procedure

The product formulation (2) is produced by blending the silver formulation and the vesicle formulation together with addition of water (that may optionally contain additional auxiliary or functional components).

The blending procedure (with simple vessel agitation) proceeds in the following order. The blending ratio reflects the ratios needed to produce the exemplar product composition above.

| No | Formulation component | % (w/w) |
|---|---|---|
| 1 | Vesicle formulation | **80.00%** |
| 2 | Silver formulation | **1.25%** |
| 3 | Water | **18.75%** |
| | **TOTAL** | **100.00%** |

Steps 2 and 3 may optionally be reversed. The resulting formulation is a homogeneous emulsion with excellent storage and operational stability.

### Total product formulation (3):

Another example formulation for the combined product formulation, using the above first, silver chloride - titanium dioxide formulation is as follows:

| No | CAS | Chemical basis | **% (w/w)** |
|---|---|---|---|
| 1 | 9004-95-9 | Polyoxyethylene (2)cetyl ether | **2.88%** |
| 2 | 112-02-7 | Hexadecyltrimethylammonium chloride | **0.32%** |
| 3 | 128446-35-5 | (2-hydroxypropyl)-beta-cyclodextrin | **3.60%** |
| 4 | 7783-90-6 | Silver chloride* | **0.06%** |
| 5 | 13463-67-7 | Titanium dioxide* | **0.24%** |
| 6 | 13463-67-7 | Titanium dioxide | **0.15%** |
| 7 | 107-21-1 | Ethylene glycol | **0.08%** |
| 8 | 68439-49-6 | Alcohol C16C18, ethoxylated | **0.05%** |
| 9 | 9004-62-0 | Hydroxyethylcellulose | **0.02%** |
| 10 | - | Polysiloxane defoamer | **0.01%** |
| 11 | 7732-18-5 | Water | **92.59%** |
| | | **TOTAL** | **100.00%** |

| | | | |
|---|---|---|---|
| * As part of silver chloride - titanium dioxide microcomposite particle. | | | |

### Preparation procedure

The product formulation (3) is produced by blending the silver formulation and the vesicle formulation together with addition of water (that may optionally contain additional auxiliary or functional components).

The blending procedure (with simple vessel agitation) proceeds in the following order. The blending ratio reflects the ratios needed to produce the exemplar product composition above.

| No | Formulation component | % (w/w) |
|---|---|---|
| 1 | Vesicle formulation | **80.00%** |
| 2 | Silver formulation | **3.00%** |
| 3 | Water | **17.00%** |
| | **TOTAL** | **100.00%** |

Steps 2 and 3 may optionally be reversed. The resulting formulation is a homogeneous emulsion with excellent storage and operational stability.

### Product use:

The product formulation may be applied onto fabric substrates through standard industrial processes (e.g. padding, dipping, coating, spraying, printing etc.).

Typical addition rate to the fabrics is in the range of 2% to 30% (weight of fabric basis).

A preferred range for treatments is 5% to 20% (weight of fabric basis) with dosing dependent on application and functional requirements.

### Product effect:

The product exhibits excellent antibacterial properties for example as tested according to ISO 20743 (Textiles - Determination of antibacterial activity of antibacterial finished products).

Two fabrics were treated with the product formulation (1) applied to the fabric at 20% (weight of fabric basis). The fabrics were treated using a lab padder and lab dryer (Drying at 120°C for 2 minutes). Fabric A was a 100% polyester woven fabric. Fabric B was a 100% cotton knit fabric. An untreated 100% polyester woven fabric was used as a control. The ISO 20743 method was used to evaluate the antibacterial efficacy of both fabrics against Staphylococcus aureus (ATCC 6538P) and Klebsiella pneumoniae (ATCC 4352). Both fabrics achieved >5 log reduction of bacteria (>99.999% reduction).

| Bacteria | Sample | Log CFU | | % reduction | Log reduction |
|---|---|---|---|---|---|
| | | Mean | St.Dev | | |
| *Staphylococcus aureus* (ATCC 6538P) | Control (Initial) | 4.4 | 0.1 | | |
| | Control (18h) | 7.2 | 0.1 | | |
| | Fabric A | 2.0 | 0.0 | 99.9994 | **5.2** |
| | Fabric B | 2.0 | 0.0 | **99.9994** | **5.2** |
| *Klebsiella pneumoniae* (ATCC 4352) | Control (Initial) | 4.3 | 0.1 | | |
| | Control (18h) | 7.5 | 0.0 | | |
| | Fabric A | 2.0 | 0.0 | **99.9997** | **5.5** |
| | Fabric B | 2.0 | 0.0 | **99.9997** | **5.5** |

The product exhibits excellent antiviral properties for example as tested according to ISO 18184 (Textiles - Determination of antiviral activity of textile products).

A 100% polyester knit fabric was treated with the product formulation (3) applied to the fabric at 10% (weight of fabric basis). The fabric was treated using a lab padder and lab dryer (Drying at 120°C for 2 minutes). The ISO 18184 method was used to evaluate the antiviral efficacy of the fabric against Betacoronavirus 1, strain OC43 (ATCC VR-1558). Testing was conducted on samples initially and also after 15x and 30x laundry cycles at 60°C (according to ISO 6330) The fabric showed >3 log reduction of Betacoronavirus initially and >2 log reduction after 30x laundry cycles.

| Virus | Sample laundry | % reduction | Log reduction (Antiviral activity) |
|---|---|---|---|
| Betacoronavirus 1, strain OC43 (ATCC VR-1558) | Initial | **99.983%** | **3.80** |
| | 15x 60°C | **99.879%** | **2.90** |
| | 30x 60°C | **99.475%** | **2.30** |

## Claims

1. Method for the preparation of an aqueous antibacterial and antiviral formulation, in particular for textile treatment, comprising silver micro or nano particles, preferably composite particles, in particular silver-silica micro composite particles or silver chloride particles, as well as non-phospholipid lipid vesicles (nPLV),
**characterised in that**
separately
a first aqueous formulation comprising silver micro or nano particles and no non-phospholipid lipid vesicles and
a second aqueous formulation comprising non-phospholipid lipid vesicles and no silver micro or nano particles
are prepared, and subsequently the first and second aqueous solutions are blended, optionally with addition of water and additional additives, at a temperature of at most 40°C,
wherein said first aqueous formulation is prepared **in that** silver micro or nano particles, preferably silver-silica micro composite particles, or silver chloride particles are added to water together with at least one cationic surfactant and/or non-ionic polymeric surfactant, optionally with addition of further silver formulation additives, until a stable homogenous dispersion is formed containing silver micro or nano particles, preferably silver-silica micro composite particles or silver chloride particles, in association with said cationic surfactant and/or non-ionic polymeric surfactant,
and wherein said second aqueous formulation is prepared **in that** at least one vesicle-forming non-phospholipid and optionally further vesicle formulation additives are added to water, are mixed at elevated temperature of more than 50°C, until a homogeneous mixture is obtained, and subsequently cooled to a temperature of at most 40°C under formation of homogeneous emulsion.

2. Method according to claim 1, wherein, preferably in case of silver-silica, said cationic surfactant is a quaternary surfactant, preferably a polymeric quaternary ammonium surfactant, in particular based on fatty acid based building blocks, polyacrylate building blocks, polymethacrylate building blocks, C10-C20 alkyl building blocks, benzyl building blocks, or a combination or mixture thereof, or is preferably selected from the group consisting of: quaternary ammonium polyacrylate, quaternary ammonium ethoxylate, quaternary ammonium propoxylate, quaternary ammonium fatty acid derivative, and is most preferably selected from the group consisting of: poly(2-(trimethylamino)ethyl methacrylate), coconut bis-(2-hydroxyethyl) methyl ammonium, oleyl bis-(2-hydroxyethyl)methyl ammonium, erucyl bis(2-hydroxyethyl)(methyl)ammonium, benzyl(2-hydroxyethyl)dimethylammonium chloride, dodecylbis(2-hydroxyethyl)methylammonium, or a combination or mixture thereof
and/or wherein, preferably in case of silver chloride particles, said non-ionic polymeric surfactant is a polyethoxylated and/or polypropoxylated surfactant, in particular based on fatty acid based building blocks, C10-C40 alkyl, aryl or arylalkyl building blocks, or a combination or mixture thereof or is preferably selected from the group consisting of: alcohol C10-C28, preferably alcohol C10 - C20, most preferably alcohol C12 - C18 or alcohol C16-18, tristyrylphenol tridecyl ether, ethoxylated in each case with 3-70 EO units, preferably with 20-60 EO units, most preferably with 30-50 EO units, wherein most preferably a system of the type alcohol C16-C18+50EO is used.

3. Method according to any of the preceding claims, wherein the first aqueous formulation is prepared in that the silver-silica micro composite particles are added to water together with said cationic surfactant, wherein the proportion of silver-silica micro composite particles is in the range of 0.1-1 %(w/w), preferably in the range of 0.2-0.5 %(w/w) and wherein the proportion of the cationic surfactant is in the range of 0.5-7.5% (w/w), preferably in the range of 1.5-5% (w/w), and wherein the resulting mixture is mixed, preferably through milling, preferably through bead milling, for a time span of at least an hour, more preferably for a time span of more than 5 hours, at a temperature of at least 20°C, preferably at a temperature at or above room temperature
and/or wherein the first aqueous formulation is prepared in that the silver-chloride particles are added to water together with said non-ionic polymeric surfactant, wherein the proportion of silver-chloride particles is in the range of 5-15 %(w/w), preferably in the range of 7-12 %(w/w) and wherein the proportion of the non-ionic polymeric surfactant is in the range of 0.5-12% (w/w), preferably in the range of 1-10% (w/w), and wherein the resulting mixture is mixed, preferably through milling, preferably through bead milling, for a time span of at least an hour, more preferably for a time span of more than 5 hours, at a temperature of at least 20°C, preferably at a temperature at or above room temperature,

4. Method according to any of the preceding claims, wherein as further silver formulation additives prior to and/or after mixing additives are added selected from the group consisting of: alcohols, glycols, diols, polyols, phosphates, acids such as acetic acid, fragrance, colourants, non-ionic surfactants, odorants, anti-foaming agents, foaming agents, rheology modifiers such as thickeners, or a combination thereof.

5. Method according to any of the preceding claims, wherein the vesicle-forming non-phospholipid is selected from the group consisting of, the values in brackets indicating the hydrocarbon chain: fatty alcohol (C12-C20), fatty acid (C12-C20), ethoxylated (C12-C20) fatty alcohol, glycol ester of (C12-C20) fatty acid, ethoxylated of (C12-C20) fatty acid, glycerol fatty acid (C12-C20) monoester, glycerol fatty acid diester (C12-C18), ethoxylated glycerol fatty acid ester (C16-C18), fatty acid diethanolamide (C12-C20), fatty acid dimethyl amide (C12-C20), fatty acid sarcosinates (C12-C20), or a combination thereof, preferably selected from a polyoxyethylene cetyl ether, palmitic acid, hexadecyl trimethylammonium bromide or chloride, oleic acid or a combination thereof,

6. Method according to any of the preceding claims, wherein said vesicle formulation additives comprise enhancers for the antiviral effect, preferably selected from the group consisting of: oligosaccharides, in particular cyclodextrin or derivatives thereof, or a steroidogenic acute regulatory protein.

7. Method according to any of the preceding claims, wherein the second aqueous formulation is prepared in that said vesicle-forming non-phospholipid and optionally further vesicle formulation additives are added to water, are mixed at elevated temperature of more than 55°C, until homogeneous mixture is obtained, and subsequently cooled to a temperature of at most 30°C under formation of homogeneous emulsion, wherein the proportion of the at least one vesicle-forming non-phospholipid is in the range of 1-8 %(w/w), preferably in the range of 2-5 %(w/w) and wherein the proportion of the enhancer if present is in the range of 1-8 % (w/w), preferably in the range of 2-6 % (w/w).

8. Method according to any of the preceding claims, wherein the second aqueous formulation comprises, as non-phospholipid, a mixture of polyoxyethylene (2) cetyl ether with hexadecyltrimethylammonium chloride or bromide, preferably in a weight proportion of 20: 1-5:1, most preferably 12:1-8:1, in a total concentration in the range of 3-5% (w/w), and/or wherein the second aqueous formulation comprises, as enhancer, cyclodextrin, preferably (2-hydroxypropyl)-beta-cyclodextrin, in a proportion of 1-7% (w/w), preferably in the range of 3-6% (w/w).

9. Method according to any of the preceding claims, wherein the first and second aqueous solutions are blended at a temperature of at most 40°C or at most 30°C, preferably around room temperature, and wherein preferably 5-20% (w/w) of said first aqueous formulation are combined with 70-90% (w/w) of said second aqueous formulation, supplemented with water to a total of 100% (w/w).

10. Aqueous antibacterial and antiviral formulation, in particular for textile treatment, comprising silver nano or micro particles, preferably silver-silica micro composite particles or silver chloride particles, as well as non-phospholipid lipid vesicles (nPLV), preferably obtained using a method according to any of the preceding claims.

11. Formulation according to claim 10, wherein it comprises the silver-silica micro composite particles or silver chloride particles in association with said cationic surfactant or non-ionic polymeric surfactant, wherein the silver-silica micro composite particles are present in a proportion in the range of 0.01-0.1% (w/w), preferably in a proportion in the range of 0.02-0.05% (w/w), and wherein the at least one cationic polymeric surfactant is present in a proportion in the range of 0.1-0.5% (w/w), preferably in the range of 0.2-0.4% (w/w),
and/or the silver-chloride particles are present in a proportion 5-15 %(w/w), preferably in the range of 7-12 %(w/w), and wherein the at least one non-ionic polymeric surfactant is present in a proportion in the range of 0.5-12% (w/w), preferably in the range of 1-10% (w/w),
and wherein said at least one vesicle-forming non-phospholipid is present in a proportion in the range of 2-5% (w/w), preferably in the range of 2.5-4% (w/w).

12. Use of a formulation according to any of the preceding claims 10-11 for the treatment of objects, in particular leather, fibrous materials such as paper and cardboard articles, polymeric surfaces including polyurethane, tarps, tents, bags, luggage, or textiles in particular for the treatment of woven, knitted or nonwoven textiles, preferably in the field of textiles for antiviral and/or antibacterial applications including masks, filters, gowns, drapes, coverings, carpets et cetera in particular for hospital uses.

13. Object, in particular leather, fibrous materials such as paper and cardboard articles, polymeric surfaces including polyurethane, tarps, tents, bags, luggage, woven, knitted or nonwoven textile treated with a formulation obtained using a method according to any of the preceding claims 1-9 or treated with the formulation according to any of claims 10-11, preferably in the field of textiles for antiviral and/or antibacterial applications including masks, filters, gowns, drapes, coverings, carpets et cetera in particular for hospital uses.

14. Method for rendering an object to wear, touch or to carry by a human, in particular leather, fibrous materials such as paper and cardboard articles, polymeric surfaces including polyurethane, tarps, tents, bags, luggage, a woven, knitted or nonwoven textile, antibacterial and/or antiviral by treating it with a formulation obtained using a method according to any of claims 1-9, or with a formulation according to any of claims 10-11.

15. Method according to claim 14, wherein the formulation is applied by padding, dipping, coating, spraying, printing or a combination thereof, and wherein the formulation is preferably added to the textile in the range of 2-30% (weight of fabric basis), preferably in the range of 5-20%.

## Patentansprüche

1. Verfahren zur Herstellung einer wässrigen antibakteriellen und antiviralen Formulierung, insbesondere zur Textilbehandlung, umfassend Silber-Mikro- oder Nanopartikel, vorzugsweise Verbundpartikel, insbesondere Silber-Silica-Mikroverbundpartikel oder Silberchloridpartikel, sowie Nicht-Phospholipid-Lipidvesikel (nPLV),
**dadurch gekennzeichnet, dass**
getrennt
eine erste wässrige Formulierung, die Silbermikro- oder -nanopartikel und keine nicht-phospholipidischen Lipidvesikel enthält, und
eine zweite wässrige Formulierung, die nicht-phospholipidische Lipidvesikel und keine Silber-Mikro- oder Nanopartikel enthält
hergestellt werden und anschließend die erste und die zweite wässrige Lösung, gegebenenfalls unter Zugabe von Wasser und weiteren Additiven, bei einer Temperatur von höchstens 40 °C gemischt werden,
wobei die erste wässrige Formulierung dadurch hergestellt wird, dass Silber-Mikro- oder Nanopartikel, vorzugsweise Silber-Silica-Mikro-Verbundpartikel, oder Silberchloridpartikel zusammen mit mindestens einem kationischen Tensid und/oder einem nichtionischen polymeren Tensid gegebenenfalls unter Zugabe weiterer Silberformulierungsadditive, bis sich eine stabile, homogene Dispersion bildet, die Silbermikro- oder -nanopartikel, vorzugsweise Silber-Silica-Mikrokompositpartikel oder Silberchloridpartikel, in Verbindung mit dem kationischen Tensid und/oder dem nichtionischen polymeren Tensid enthält,
wobei die zweite wässrige Formulierung dadurch hergestellt wird, dass mindestens ein vesikelbildendes Nicht-Phospholipid und gegebenenfalls weitere Vesikelformulierungsadditive zu Wasser gegeben, bei einer erhöhten Temperatur von mehr als 50 °C gemischt werden, bis eine homogene Mischung erhalten wird, und anschließend unter Bildung einer homogenen Emulsion auf eine Temperatur von höchstens 40 °C abgekühlt werden.

2. Verfahren nach Anspruch 1, wobei, vorzugsweise im Fall von Silber-Silica, das kationische Tensid ein quaternäres Tensid ist, vorzugsweise ein polymeres quaternäres Ammoniumtensid, insbesondere auf der Basis von Fettsäure-Bausteinen, Polyacrylat-Bausteinen, Polymethacrylat-Bausteinen, C10-C20-Alkyl-Bausteinen, Benzyl-Bausteinen oder einer Kombination oder Mischung davon besteht oder vorzugsweise aus der Gruppe ausgewählt ist, bestehend aus: quaternärem Ammonium-Polyacrylat, quaternärem Ammonium-Ethoxylat, quaternärem Ammonium-Propoxylat, quaternärem Ammonium-Fettsäurederivat, und am bevorzugtesten aus der Gruppe ausgewählt ist, bestehend aus: Poly(2-(trimethylamino)ethyl methacrylat), Kokosnuss-bis-(2-hydroxyethyl)methylammonium, Oleyl-bis-(2-hydroxyethyl)methylammonium, Erucyl-bis(2-hydroxyethyl)(methyl)ammonium, Benzyl(2-hydroxyethyl)dimethylammoniumchlorid, Dodecylbis(2-hydroxyethyl)methylammonium oder einer Kombination oder Mischung davon
und/oder wobei, vorzugsweise im Falle von Silberchlorid partikeln, das nichtionische polymere Tensid ein polyethoxyliertes und/oder polypropoxyliertes Tensid ist, insbesondere auf der Basis von Fettsäure-Bausteinen, C10-C40-Alkyl-, Aryl- oder Arylalkyl-Bausteinen, oder einer Kombination oder Mischung davon, oder vorzugsweise ausgewählt ist aus der Gruppe bestehend aus: C10-C28-Alkohol, vorzugsweise C10-C20-Alkohol, am bevorzugtesten C12 -C18 oder Alkohol C16-C18, Tristyrylphenoltridecylether, jeweils ethoxyliert mit 3-70 EO-Einheiten, vorzugsweise mit 20-60 EO-Einheiten, am bevorzugtesten mit 30-50 EO-Einheiten, wobei am bevorzugtesten ein System vom Typ Alkohol C16-C18+50EO verwendet wird.

3. Verfahren nach einem der vorstehenden Ansprüche, wobei die erste wässrige Formulierung dadurch hergestellt wird, dass die Silber-Silica-Mikrokompositpartikel zusammen mit dem kationischen Tensid zu Wasser gegeben werden, wobei der Anteil an Silber-Silica-Mikrokompositpartikeln im Bereich von 0,1-1 %(Gew./Gew.), vorzugsweise im Bereich von 0,2-0,5 % (Gew./Gew.), und wobei der Anteil des kationischen Tensids im Bereich von 0,5-7,5 % (Gew./Gew.), vorzugsweise im Bereich von 1,5-5 % (Gew./Gew.), liegt, und wobei die resultierende Mischung gemischt wird, vorzugsweise durch Mahlen, vorzugsweise durch Perlmahlen, über einen Zeitraum von mindestens einer Stunde, noch bevorzugter über einen Zeitraum von mehr als 5 Stunden, bei einer Temperatur von mindestens 20 °C, vorzugsweise bei einer Temperatur von Raumtemperatur oder darüber
und/oder wobei die erste wässrige Formulierung dadurch hergestellt wird, dass die Silberchloridpartikel zusammen mit dem nichtionischen polymeren Tensid zu Wasser gegeben werden, wobei der Anteil an Silberchloridpartikeln im Bereich von 5 bis 15 % (Gew./Gew.) liegt, vorzugsweise im Bereich von 7-12 % (Gew./Gew.) liegt und wobei der Anteil des nichtionischen polymeren Tensids im Bereich von 0,5-12 % (Gew./Gew.), vorzugsweise im Bereich von 1-10 % (Gew./Gew.), liegt, und wobei die resultierende Mischung vorzugsweise durch Mahlen, vorzugsweise durch Perlmahlen, über einen Zeitraum von mindestens einer Stunde, noch bevorzugter über einen Zeitraum von mehr als 5 Stunden, bei einer Temperatur von mindestens 20 °C, vorzugsweise bei einer Temperatur von Raumtemperatur oder darüber, gemischt wird,

4. Verfahren nach einem der vorstehenden Ansprüche, wobei als weitere Silberformulierungszusätze vor und/oder nach dem Mischen Zusätze hinzugefügt werden, die aus der Gruppe ausgewählt sind, bestehend aus: Alkoholen, Glykolen, Diolen, Polyolen, Phosphaten, Säuren wie Essigsäure, Duftstoffen, Farbstoffen, nichtionischen Tensiden, Geruchsstoffen, Antischaummitteln, Schaumbildnern, Rheologiemodifikatoren wie Verdickungsmitteln oder einer Kombination davon.

5. Verfahren nach einem der vorstehenden Ansprüche, wobei das vesikelbildende Nicht-Phospholipid aus der Gruppe ausgewählt ist, bestehend aus, wobei die Werte in Klammern die Kohlenwasserstoffkette angeben: Fettalkohol (C12-C20), Fettsäure (C12-C20), ethoxylierter (C12-C20)-Fettalkohol, Glykolester von (C12-C20)-Fettsäure, ethoxylierte (C12-C20)-Fettsäure, Glycerin-Fettsäure-(C12-C20)-monoester, Glycerin-Fettsäure-diester (C12-C18), ethoxylierter Glycerin-Fettsäureester (C16-C18), Fettsäure-diethanolamid (C12-C20), Fettsäure-dimethylamid (C12-C20), Fettsäuresarcosinate (C12-C20) oder eine Kombination davon, vorzugsweise ausgewählt aus einem Polyoxyethylen-cetyl-ether, Palmitinsäure, Hexadecyltrimethylammoniumbromid oder - chlorid, Ölsäure oder einer Kombination davon,

6. Verfahren nach einem der vorstehenden Ansprüche, wobei die Additive der Vesikelformulierung Verstärker für die antivirale Wirkung umfassen, die vorzugsweise aus der Gruppe ausgewählt sind, bestehend aus: Oligosacchariden, insbesondere Cyclodextrin oder Derivaten davon, oder einem steroidogenen akuten regulatorischen Protein.

7. Verfahren nach einem der vorstehenden Ansprüche, wobei die zweite wässrige Formulierung dadurch hergestellt wird, dass das vesikelbildende Nicht-Phospholipid und gegebenenfalls weitere Vesikelformulierungsadditive zu Wasser gegeben, bei einer erhöhten Temperatur von mehr als 55 °C gemischt werden, bis eine homogene Mischung erhalten wird, und anschließend unter Bildung einer homogenen Emulsion auf eine Temperatur von höchstens 30 °C abgekühlt werden, wobei der Anteil des mindestens einen vesikelbildendenbildenden Nicht-Phospholipids im Bereich von 1-8 % (Gew./Gew.), vorzugsweise im Bereich von 2-5 % (Gew./Gew.) liegt und wobei der Anteil des Verstärkers, falls vorhanden, im Bereich von 1-8 % (Gew./Gew.), vorzugsweise im Bereich von 2-6 % (Gew./Gew.) liegt.

8. Verfahren nach einem der vorstehenden Ansprüche, wobei die zweite wässrige Formulierung als Nicht-Phospholipid eine Mischung aus Polyoxyethylen(2)-cetyl-ether mit Hexadecyltrimethylammoniumchlorid oder -bromid enthält, vorzugsweise in einem Gewichtsverhältnis von 20:1 bis 5:1, am bevorzugtesten von 12:1 bis 8:1, in einer Gesamtkonzentration im Bereich von 3-5 % (Gew./Gew.), und/oder wobei die zweite wässrige Formulierung als Verstärker Cyclodextrin, vorzugsweise (2-Hydroxypropyl)-beta-Cyclodextrin, in einem Anteil von 1-7 % (Gew./Gew.), vorzugsweise im Bereich von 3-6 % (Gew./Gew.), umfasst.

9. Verfahren nach einem der vorstehenden Ansprüche, wobei die erste und die zweite wässrige Lösung bei einer Temperatur von höchstens 40 °C oder höchstens 30 °C, vorzugsweise bei etwa Raumtemperatur, gemischt werden, und wobei vorzugsweise 5-20 % (Gew./Gew.) der ersten wässrigen Formulierung mit 70-90 % (Gew./Gew.) der zweiten wässrigen Formulierung kombiniert werden, ergänzt mit Wasser auf insgesamt 100 % (Gew./Gew.).

10. Wässrige antibakterielle und antivirale Formulierung, insbesondere zur Textilbehandlung, umfassend Silber-Nano- oder -Mikropartikel, vorzugsweise Silber-Silica-Mikrokompositpartikel oder Silberchloridpartikel, sowie Nicht-Phospholipid-Lipidvesikel (nPLV), vorzugsweise erhalten unter Verwendung eines Verfahrens gemäß einem der vorstehenden Ansprüche.

11. Formulierung nach Anspruch 10, wobei sie die Silber-Silica-Mikrokompositpartikel oder Silberchloridpartikel in Verbindung mit dem kationischen Tensid oder dem nichtionischen polymeren Tensid umfasst, wobei die Silber-Silica-Mikrokompositpartikel in einem Anteil im Bereich von 0,01-0,1 % (Gew./Gew.), vorzugsweise in einem Anteil im Bereich von 0,02 bis 0,05 % (Gew./Gew.), und wobei das mindestens eine kationische polymere Tensid in einem Anteil im Bereich von 0,1 bis 0,5 % (Gew./Gew.), vorzugsweise im Bereich von 0,2 bis 0,4 % (Gew./Gew.),
und/oder die Silberchloridpartikel in einem Anteil von 5-15 % (Gew./Gew.), vorzugsweise im Bereich von 7-12 % (Gew./Gew.), und wobei das mindestens eine nichtionische polymere Tensid in einem Anteil im Bereich von 0,5 bis 12 % (Gew./Gew.), vorzugsweise im Bereich von 1 bis 10 % (Gew./Gew.),
und wobei das mindestens eine vesikelbildende Nicht-Phospholipid in einem Anteil im Bereich von 2-5 % (Gew./Gew.), vorzugsweise im Bereich von 2,5-4 % (Gew./Gew.), vorliegt.

12. Verwendung einer Formulierung gemäß einem der vorstehenden Ansprüche 10-11 zur Behandlung von Gegenständen, insbesondere Leder, Fasermaterialien wie Papier- und Kartonartikel, polymeren Oberflächen einschließlich Polyurethan, Planen, Zelten, Taschen, Gepäckstücken oder Textilien, insbesondere zur Behandlung von gewebten, gestrickten oder nicht gewebten Textilien, vorzugsweise im Bereich von Textilien für antivirale und/oder antibakterielle Anwendungen, einschließlich Masken, Filtern, Kitteln, Abdecktüchern, Bezügen, Teppichen usw., insbesondere für den Einsatz im Krankenhaus.

13. Gegenstand, insbesondere Leder, Fasermaterialien wie Papier- und Kartonartikel, polymere Oberflächen einschließlich Polyurethan, Planen, Zelte, Taschen, Gepäck, gewebte, gestrickte oder nicht gewebte Textilien, die mit einer nach einem der vorstehenden Ansprüche 1 bis 9 erhaltenen Formulierung oder mit der Formulierung gemäß einem der Ansprüche 10 bis 11 behandelt wurden, vorzugsweise im Bereich von Textilien für antivirale und/oder antibakterielle Anwendungen, einschließlich Masken, Filter, Schutzkittel, Abdecktücher, Bezüge, Teppiche usw., insbesondere für den Einsatz im Krankenhaus.

14. Verfahren zur Herstellung eines Gegenstands, der vom Menschen getragen, berührt oder mitgeführt werden kann, insbesondere aus Leder, Fasermaterialien wie Papier- und Kartonartikel, polymeren Oberflächen einschließlich Polyurethan, Planen, Zelten, Taschen, Gepäck, gewebten, gestrickten oder nicht gewebten Textilien antibakteriell und/oder antiviral zu machen, indem es mit einer nach einem Verfahren gemäß einem der Ansprüche 1 bis 9 erhaltenen Formulierung oder mit einer Formulierung gemäß einem der Ansprüche 10 bis 11 behandelt wird.

15. Verfahren nach Anspruch 14, wobei die Formulierung durch Imprägnieren, Tauchen, Beschichten, Sprühen, Bedrucken oder eine Kombination davon aufgebracht wird und wobei die Formulierung dem Textil vorzugsweise im Bereich von 2-30 % (bezogen auf das Gewebegewicht), vorzugsweise im Bereich von 5-20 %, zugesetzt wird.

## Revendications

1. Procédé de préparation d'une formulation aqueuse antibactérienne et antivirale, en particulier pour le traitement des textiles, comprenant des micro ou nanoparticules d'argent, de préférence des particules composites, en particulier des micro-particules composites d'argent-silice ou des particules de chlorure d'argent, ainsi que des vésicules lipidiques non phospholipidiques (nPLV),
**caractérisée en ce que**
séparément
une première formulation aqueuse comprenant des micro ou nanoparticules d'argent et aucune vésicule lipidique non phospholipidique et
une deuxième formulation aqueuse comprenant des vésicules lipidiques non phospholipidiques et aucune microparticule ou nanoparticule d'argent
sont préparées, puis les première et deuxième solutions aqueuses sont mélangées, éventuellement avec ajout d'eau et d'additifs supplémentaires, à une température d'au plus 40 °C,
dans laquelle ladite première formulation aqueuse est préparée en ajoutant des micro ou nanoparticules d'argent, de préférence des micro-particules composites d'argent-silice, ou des particules de chlorure d'argent à de l'eau, conjointement avec au moins un tensioactif cationique et/ou un tensioactif polymère non ionique, éventuellement avec l'ajout d'autres additifs de formulation d'argent, jusqu'à ce qu'une dispersion homogène stable soit formée, contenant des microparticules ou des nanoparticules d'argent, de préférence des microparticules composites d'argent-silice ou des particules de chlorure d'argent, en association avec ledit tensioactif cationique et/ou ledit tensioactif polymère non ionique,
et dans laquelle ladite deuxième formulation aqueuse est préparée en ajoutant à l'eau au moins un agent non phospholipidique formant des vésicules et, éventuellement, d'autres additifs de formulation vésiculaire, en mélangeant le tout à une température élevée supérieure à 50 °C jusqu'à obtention d'un mélange homogène, puis en refroidissant à une température d'au plus 40 °C avec formation d'une émulsion homogène.

2. Procédé selon la revendication 1, dans lequel, de préférence dans le cas de l'argent-silice, ledit tensioactif cationique est un tensioactif quaternaire, de préférence un tensioactif quaternaire d'ammonium polymère, en particulier à base de motifs constitutifs d'acides gras, de motifs constitutifs de polyacrylates, de motifs constitutifs de polyméthacrylates, de motifs constitutifs d'alkyles en C10-C20, des motifs benzyle, ou une combinaison ou un mélange de ceux-ci, ou est de préférence choisi dans le groupe constitué par : un polyacrylate d'ammonium quaternaire, un éthoxylate d'ammonium quaternaire, un propoxylate d'ammonium quaternaire, un dérivé d'acide gras d'ammonium quaternaire, et est de préférence choisi dans le groupe constitué par : le poly(2-(triméthylamino)éthyl méthacrylate), le bis-(2-hydroxyéthyl)méthylammonium de coco, le bis-(2-hydroxyéthyl)méthylammonium d'oléyle, le bis(2-hydroxyéthyl)(méthyl)ammonium d'érucyle, le chlorure de benzyl(2-hydroxyéthyl)diméthylammonium, le dodécylbis(2-hydroxyéthyl)méthylammonium, ou une combinaison ou un mélange de ceux-ci
et/ou dans lequel, de préférence dans le cas de particules de chlorure d'argent, ledit tensioactif polymère non ionique est un tensioactif polyéthoxylé et/ou polypropoxylé, en particulier à base de motifs structuraux dérivés d'acides gras, des motifs alkyle en C10-C40, aryle ou arylalkyle, ou une combinaison ou un mélange de ceux-ci, ou est de préférence choisi parmi le groupe constitué d'un alcool en C10-C28, de préférence un alcool en C10-C20, de préférence encore un alcool en C12 - C18 ou d'alcool en C16-C18, d'éther tridécylique de tristyrylphénol, éthoxylé dans chaque cas avec 3 à 70 unités EO, de préférence avec 20 à 60 unités EO, de manière encore plus préférentielle avec 30 à 50 unités EO, un système du type alcool en C16-C18 + 50 EO étant de manière encore plus préférentielle utilisé.

3. Procédé selon l'une quelconque des revendications précédentes, dans lequel la première formulation aqueuse est préparée en ajoutant les particules microcomposites d'argent-silice à de l'eau conjointement avec ledit tensioactif cationique, la proportion de particules microcomposites d'argent-silice étant comprise entre 0,1 et 1 %(p/p), de préférence comprise entre 0,2 et 0,5 % (p/p), et dans lequel la proportion de tensioactif cationique est comprise entre 0,5 et 7,5 % (p/p), de préférence entre 1,5 et 5 % (p/p), et dans laquelle le mélange obtenu est mélangé, de préférence par broyage, de préférence par broyage à billes, pendant une durée d'au moins une heure, de préférence pendant une durée supérieure à 5 heures, à une température d'au moins 20 °C, de préférence à une température égale ou supérieure à la température ambiante
et/ou dans lequel la première formulation aqueuse est préparée en ajoutant les particules de chlorure d'argent à de l'eau conjointement avec ledit tensioactif polymère non ionique, la proportion de particules de chlorure d'argent étant comprise entre 5 et 15 % (p/p), de préférence comprise entre 7 et 12 % (p/p) et dans laquelle la proportion de tensioactif polymère non ionique est comprise entre 0,5 et 12 % (p/p), de préférence entre 1 et 10 % (p/p), et dans lequel le mélange obtenu est mélangé, de préférence par broyage, de préférence par broyage à billes, pendant une durée d'au moins une heure, de préférence pendant une durée supérieure à 5 heures, à une température d'au moins 20 °C, de préférence à une température égale ou supérieure à la température ambiante,

4. Procédé selon l'une quelconque des revendications précédentes, dans lequel, en tant qu'additifs supplémentaires de la formulation d'argent avant et/ou après le mélange, on ajoute des additifs choisis dans le groupe constitué par : les alcools, les glycols, les diols, les polyols, les phosphates, les acides tels que l'acide acétique, les parfums, les colorants, les tensioactifs non ioniques, les odorants, les agents antimousse, les agents moussants, les modificateurs de rhéologie tels que les épaississants, ou une combinaison de ceux-ci.

5. Procédé selon l'une quelconque des revendications précédentes, dans lequel le non-phospholipide formant des vésicules est choisi parmi le groupe constitué de, les valeurs entre parenthèses indiquant la chaîne hydrocarbonée : alcool gras (C12-C20), acide gras (C12-C20), alcool gras (C12-C20) éthoxylé, ester glycolique d'acide gras (C12-C20), acide gras (C12-C20) éthoxylé, monoester de glycérol et d'acide gras (C12-C20), diester de glycérol et d'acide gras (C12-C18), ester de glycérol et d'acide gras éthoxylé (C16-C18), diéthanolamide d'acide gras (C12-C20), diméthylamide d'acide gras (C12-C20), sarcosinates d'acide gras (C12-C20), ou une combinaison de ceux-ci, de préférence choisis parmi un éther cétylique de polyoxyéthylène, l'acide palmitique, le bromure ou le chlorure d'hexadécyl triméthylammonium, l'acide oléique ou une combinaison de ceux-ci,

6. Procédé selon l'une quelconque des revendications précédentes, dans lequel lesdits additifs de la formulation vésiculaire comprennent des agents potentialisateurs de l'effet antiviral, choisis de préférence parmi le groupe constitué par : les oligosaccharides, en particulier la cyclodextrine ou ses dérivés, ou une protéine de régulation aiguë stéroïdogène.

7. Procédé selon l'une quelconque des revendications précédentes, dans lequel la deuxième formulation aqueuse est préparée en ajoutant ledit non-phospholipide formant des vésicules et, éventuellement, d'autres additifs de formulation vésiculaire à de l'eau, en mélangeant le tout à une température élevée supérieure à 55 °C jusqu'à obtention d'un mélange homogène, puis en refroidissant à une température d'au plus 30 °C avec formation d'une émulsion homogène, dans laquelle la proportion dudit au moins un non-phospholipideest comprise entre 1 et 8 % (p/p), de préférence entre 2 et 5 % (p/p), et dans laquelle la proportion de l'activateur, s'il est présent, est comprise entre 1 et 8 % (p/p), de préférence entre 2 et 6 % (p/p).

8. Procédé selon l'une quelconque des revendications précédentes, dans lequel la deuxième formulation aqueuse comprend, en tant que non-phospholipide, un mélange de polyoxyéthylène (2) cétyl éther avec du chlorure ou du bromure d'hexadécyltriméthylammonium, de préférence dans une proportion pondérale de 20:1 à 5:1, de préférence encore de 12:1 à 8:1, à une concentration totale comprise entre 3 et 5 % (p/p), et/ou dans laquelle la deuxième formulation aqueuse comprend, en tant qu'activateur, de la cyclodextrine, de préférence de la (2-hydroxypropyl)-bêta-cyclodextrine, dans une proportion de 1 à 7 % (p/p), de préférence comprise entre 3 et 6 % (p/p).

9. Procédé selon l'une quelconque des revendications précédentes, dans lequel les première et deuxième solutions aqueuses sont mélangées à une température d'au plus 40 °C ou d'au plus 30 °C, de préférence à température ambiante, et dans lequel de préférence 5 à 20 % (p/p) de ladite première formulation aqueuse d' s sont combinés avec 70 à 90 % (p/p) de ladite seconde formulation aqueuse, complétée par de l'eau jusqu'à un total de 100 % (p/p).

10. Formulation aqueuse antibactérienne et antivirale, en particulier pour le traitement des textiles, comprenant des nanoparticules ou des microparticules d'argent, de préférence des microparticules composites d'argent-silice ou des particules de chlorure d'argent, ainsi que des vésicules lipidiques non phospholipidiques (nPLV), obtenues de préférence selon un procédé selon l'une quelconque des revendications précédentes.

11. Formulation selon la revendication 10, dans laquelle elle comprend les microparticules composites d'argent-silice ou les particules de chlorure d'argent en association avec ledit tensioactif cationique ou ledit tensioactif polymère non ionique, dans laquelle les microparticules composites d'argent-silice sont présentes dans une proportion comprise entre 0,01 et 0,1 % (p/p), de préférence dans une proportion comprise entre 0,02 et 0,05 % (p/p), et dans laquelle le ou les tensioactifs polymères cationiques sont présents dans une proportion comprise entre 0,1 et 0,5 % (p/p), de préférence entre 0,2 et 0,4 % (p/p),
et/ou les particules de chlorure d'argent sont présentes en une proportion de 5 à 15 % (p/p), de préférence comprise entre 7 et 12 % (p/p), et dans lequel le ou les tensioactifs polymères non ioniques sont présents en une proportion comprise entre 0,5 et 12 % (p/p), de préférence entre 1 et 10 % (p/p),
et dans laquelle ledit au moins un non-phospholipide formant des vésicules est présent en une proportion comprise entre 2 et 5 % (p/p), de préférence comprise entre 2,5 et 4 % (p/p).

12. Utilisation d'une formulation selon l'une quelconque des revendications 10 à 11 précédentes pour le traitement d'objets, en particulier le cuir, de matériaux fibreux tels que des articles en papier et en carton, de surfaces polymères, y compris le polyuréthane, de bâches, de tentes, de sacs, de bagages ou de textiles, en particulier pour le traitement de textiles tissés, tricotés ou non tissés, de préférence dans le domaine des textiles destinés à des applications antivirales et/ou antibactériennes, y compris des masques, des filtres, des blouses, des draps, des revêtements, des tapis, etc., en particulier pour des utilisations hospitalières.

13. Objet, en particulier le cuir, les matériaux fibreux tels que les articles en papier et en carton, les surfaces polymères, y compris le polyuréthane, les bâches, les tentes, sacs, bagages, textiles tissés, tricotés ou non tissés, traités avec une formulation obtenue selon l'un quelconque des procédés visés aux revendications 1 à 9 précédentes ou traités avec la formulation visée à l'une quelconque des revendications 10 à 11, de préférence dans le domaine des textiles destinés à des applications antivirales et/ou antibactériennes, notamment les masques, filtres, blouses, draps, revêtements, tapis, etc., en particulier pour des utilisations hospitalières.

14. Procédé pour conférer à un objet, en particulier au cuir, des matériaux fibreux tels que des articles en papier et en carton, des surfaces polymères, y compris le polyuréthane, des bâches, des tentes, des sacs, des bagages, un textile tissé, tricoté ou non tissé, antibactérien et/ou antiviral en le traitant avec une formulation obtenue selon l'un quelconque des procédés selon les revendications 1 à 9, ou avec une formulation selon l'une quelconque des revendications 10 à 11.

15. Procédé selon la revendication 14, dans lequel la formulation est appliquée par imprégnation, trempage, enduction, pulvérisation, impression ou une combinaison de ces procédés, et dans lequel la formulation est de préférence ajoutée au textile dans une proportion comprise entre 2 et 30 % (par rapport au poids du tissu), de préférence dans une proportion comprise entre 5 et 20 %.
